# FASCICULE DE BREVET EUROPEEN

(11) **EP 0 835 616 B1**
(45) Date de publication et mention de la délivrance du brevet: **30.07.2003**
(21) Numéro de dépôt: 97402389.7
(22) Date de dépôt: 10.10.1997
(51) Int. Cl.: A23P 1/16, A23L 1/212

(54) **Procédé de fabrication de mousses alimentaires, mousses obtenues par ce procédé, préparations pour la fabrication de ces mousses et procédés de fabrication de ces préparations**
Schaumspeise und Verfahren zu ihrer Herstellung, Vormischung dafür, und Verfahren zur Herstellung von dieser Vormischung
Edible mousse and process for preparing it, premix used for making said mousse, and process for making said premix

(30) Priorité: 11.10.1996 FR 9612440
(43) Date de publication de la demande: 15.04.1998
(73) Titulaire: Ponthier, Yves, 19130 Objat (FR)
(72) Inventeur: Ponthier, Yves, 19130 Objat (FR)
(74) Mandataire: Tanty, François

(56) Documents cités:
- EP-A- 0 086 032
- EP-A- 0 648 434
- DE-A- 2 609 998
- FR-A- 2 710 501
- GB-A- 951 011
- GB-A- 1 077 338
- GB-A- 1 476 309
- GB-A- 2 131 669
- US-A- 2 844 468
- US-A- 4 199 608
- US-A- 4 208 444

## Description

La présente invention a pour objet un procédé de fabrication de mousses alimentaires, en particulier de mousses de fruits, les mousses obtenues par ce procédé, des préparations pour la fabrication de ces mousses, ainsi que des procédés pour la fabrication de ces préparations.

On sait qu'un certain nombre de préparations culinaires, notamment pâtissières, utilisent des mousses qui sont réalisées à partir de purées, par exemple de fruits, émulsionnées avec de la crème et fixées avec de la gélatine.

La fabrication traditionnelle des mousses de fruits est un travail délicat qui, pour être mené à bien, doit, dans la pratique, être exécuté par de bons professionnels.

Selon le procédé traditionnel, on chauffe une partie de la purée de fruits avec de la gélatine et on introduit le reste de la purée de fruits pour obtenir un mélange intime de purée de fruits et de gélatine. On prépare séparément une crème chantilly en fouettant de la crème fraîche et du sucre, puis on incorpore la préparation à base de purée de fruits à la crème chantilly avec éventuellement du blanc d'oeuf.

Ce procédé se révèle difficile à mettre en oeuvre car il nécessite la connaissance de tours de main portant en particulier sur l'incorporation de la crème chantilly et sur l'obtention de préparation à base de purée de fruits et de gélatine.

On connaît également un procédé de fabrication de mousses de fruits qui fait appel à une composition industrielle pulvérulente à base de poudre de fruits lyophilisés, de gélatine en poudre et de dextrose.

Après avoir dilué cette composition en poudre dans de l'eau chaude, on l'incorpore à de la crème chantilly, ce qui ne résout pas le problème posé par cette incorporation et ne permet d'obtenir qu'une mousse de fruits de qualité moyenne.

On connaît par le brevet français 93 12214 un procédé de fabrication des mousses alimentaires qui consiste à mélanger une purée, par exemple de fruits, à une première préparation constituée par de la gélatine contenant une charge finement dispersée, telle que des protéines laitières ou végétales, à incorporer à la préparation ainsi obtenue une seconde préparation constituée par un mélange de gélatine et d'émulsifiant, puis à traiter avec un batteur le mélange ainsi obtenu en y ajoutant une composition à base de crème, ce qui permet d'obtenir la mousse alimentaire.

On connaît par ailleurs par la demande de brevet britannique 2 131 669 un procédé de fabrication de mousses alimentaires dans lequel une préparation essentiellement à base de matière grasse est mélangée à un liquide au moment de l'utilisation.

Cette préparation est disponible sous une forme solide grâce à la teneur élevée en matière grasse, et peut être conservée à température ambiante sous forme de cubes par exemple, ou sous une forme semi-solide, c'est-à-dire sous forme de pâte, si la matière grasse présente un point de fusion suffisamment bas.

La présente invention a pour objet un nouveau procédé qui, de manière surprenante, permet d'obtenir un coefficient de foisonnement très important, de l'ordre de 4 à 5 et une excellente tenue de la mousse.

La présente invention sera décrite en se référant plus particulièrement à une mousse de fruits, mais elle peut s'appliquer également à des mousses alimentaires de natures différentes, telles que par exemple des mousses de légumes, de poissons ou de crustacés ou des mousses obtenues à partir d'autres bases alimentaires, par exemple chocolatées ou caramélisées.

La présente invention a notamment pour objet un procédé de fabrication d'une préparation aqueuse tel que défini dans la revendication 1.

Dans une variante de l'invention, la préparation réalisée à partir d'une base alimentaire, d'une base foisonnante à froid et d'un agent gélifiant est introduite dans une machine conventionnelle à fabriquer la crème chantilly qui reçoit également une préparation à base de crème, ladite machine se substituant au batteur pour l'obtention de la mousse alimentaire selon l'invention.

Conformément à l'invention, la base alimentaire peut être constituée par exemple par une purée de fruits frais ou reconstitués à partir de poudre additionnée ou non de sucre, par une telle purée de légumes, de poissons ou de crustacés, ou par une dilution telle que de l'eau caramélisée ou chocolatée.

La base alimentaire peut contenir d'autres adjuvants tels que des arômes.

La base foisonnante à froid peut être obtenue selon des procédés connus en mélangeant à chaud en phase aqueuse une matière protéinique grasse animale ou végétale avec un émulsifiant puis en procédant à l'atomisation de ce mélange pour obtenir une poudre fine dans laquelle l'émulsifiant est finement dispersé sur la matière protéinique, ce qui lui permet d'exercer son pouvoir émulsifiant à basse température.

Dans une première variante de l'invention, l'agent gélifiant est mis en solution en milieu aqueux à une température qui peut être par exemple comprise entre 70 et 90°C l'important étant que cette température soit suffisante pour permettre la dissolution totale de l'agent gélifiant.

La base foisonnante contenant l'émulsifiant ainsi que la base alimentaire sont ensuite mélangées à la dissolution d'agent gélifiant pour obtenir la préparation selon l'invention.

Dans une autre variante de l'invention, on utilise un agent gélifiant fixé sur un support protéinique puis atomisé sous forme de poudre.

Ce support protéinique sur lequel est fixé l'agent gélifiant est en particulier à base de protéines végétales ou animales telles que des protéines de blé ou des protéines lactiques.

Les poudres atomisées d'agent gélifiant et d'émulsionnant peuvent ainsi être directement incorporées à froid à la base alimentaire, soit séparément, soit après mélange des deux poudres alimentaires, soit séparément, soit après mélange des deux poudres atomisées.

On obtient ainsi une masse thixotropique, c'est-à-dire une masse qui a tendance à se liquéfier lorsqu'elle est malaxée mais qui reprend une structure sensiblement rigide lorsqu'elle est laissée immobile.

Selon un mode de réalisation particulier de l'invention, la base foisonnante est réalisée à partir de matière grasse animale ou végétale, l'émulsifiant étant un ester de monoglycéride et/ou du diglycéride d'acide gras alimentaire.

Des émulsifiants alimentaires utilisables pour mettre en oeuvre l'invention sont par exemple ceux connus sous les codes E471, E472 et E472B.

Selon un mode de réalisation particulier, l'agent gélifiant est constitué par de la gélatine alimentaire.

Selon un autre mode de réalisation, l'agent gélifiant peut être fixé sur un support protéinique et se présenter sous forme de poudre atomisée.

Les proportions d'agent gélifiant et de base foisonnante à froid sont le plus souvent sensiblement les mêmes, par exemple de 2,5 à 5% et de préférence de 3 à 4% en poids de la préparation contenant la base alimentaire.

La base foisonnante à froid qui contient l'émulsifiant peut par exemple contenir en outre de 50 à 60% de matière grasse.

Cependant, la proportion d'agent gélifiant peut être augmentée et/ou celle d'émulsifiant diminuée dans le cas d'une base alimentaire liquide telle qu'une eau caramélisée ou chocolatée.

Au contraire, dans le cas d'une base alimentaire visqueuse telle que de la purée de cassis, la proportion d'agent gélifiant peut être diminuée et/ou la base foisonnante à froid peut être augmentée.

De même, lorsque la préparation est destinée à être utilisée dans une machine à fabriquer la crème chantilly la proportion d'agent gélifiant est avantageusement des deux tiers environ de la proportion de base foisonnante à froid.

La présente invention a également pour objet une préparation aqueuse pour la fabrication de mousses alimentaires telle que définie dans les revendications 6 à 13.

La nature des différents constituants de cette préparation a été décrite ci-dessus en se référant au mode de mise en oeuvre de l'invention.

Cette préparation se conserve facilement à l'état surgelé dans les conditions qui sont d'un usage courant dans l'industrie alimentaire.

Elle peut être conditionnée de manière aseptique pour une plus longue conservation à température ambiante.

Elle peut également subir un traitement UHT (ultra haute température) pour accroître ses capacités de conservation à température ambiante.

La présente invention a encore pour objet un procédé de fabrication de mousses alimentaires tel que défini dans les revendications 14 et 15.

Conformément à l'invention, il suffit, après avoir laissé décongeler cette préparation, d'y ajouter une composition à base de crème, et de traiter le mélange obtenu avec un batteur pendant quelques minutes pour obtenir immédiatement une mousse alimentaire d'excellente qualité présentant un foisonnement important et une très bonne tenue.

La composition à base de crème utilisée selon l'invention, peut comporter une ou plusieurs crèmes d'origine animale ou végétale, éventuellement incorporées à un lait d'origine animale ou végétale.

La préparation décongelée peut être mélangée à la composition à base de crème par exemple à raison de 1 kg de préparation contenant la base alimentaire pour 0,6 à 2 et de préférence 1 à 1,2 litre de crème animale pure ou 0,3 à 1 et de préférence 0,5 à 0,6 litre de crème végétale, par exemple à base d'huile de coco hydrogénée ou d'huile de soja, mélangée à une quantité de lait animal ou végétal sensiblement égale.

L'invention permet d'obtenir des mousses alimentaires ayant un coefficient de foisonnement élevé, par exemple supérieur à 4.

On rappelle que l'on entend par coefficient de foisonnement le rapport du volume final de la mousse alimentaire au volume de la composition à base de crème.

On rappelle également que le coefficient de foisonnement de la crème chantilly traditionnelle est d'environ 2.

Les qualités de la mousse obtenue selon l'invention sont plus élevées que celles des mousses connues à ce jour, notamment celles obtenues par le procédé du brevet français 93 12214 dont le foisonnement est sensiblement inférieur à 4.

La mousse obtenue selon l'invention présente un aspect, une texture et des qualités gustatives au moins égales aux meilleures mousses alimentaires réalisées à l'aide du procédé traditionnel par des pâtissiers expérimentés.

Cette mousse peut être surgelée et elle présente une bonne résistance aux chocs thermiques.

Elle a une structure fine non élastique et non collante. Elle reste stable et permet un bon découpage.

On va maintenant décrire à titre d'exemples non limitatifs plusieurs modes de réalisation de mousses alimentaires selon l'invention.

### Exemple 1

Pour préparer une mousse de fraises, on dissout dans 9 litres d'eau à 85°C 1,7 kg d'une composition gélifiante contenant environ 80% de gélatine alimentaire telle que celle vendue sous la dénomination TDA par la Société HAHN. On ajoute à cette solution 1,7 Kg d'une base foisonnante constituée par une poudre émulsifiante à froid obtenue par atomisation qui contient environ 30% d'émulsifiants à base d'esters lactiques de mono et de diglycéride d'acide gras et environ 60% de matières grasses végétales, telle que la poudre vendue sous la dénomination DAVIWT par la Société HAHN.

On ajoute à cette préparation 22 kg de purée de fraises et 7,6 kg de sucre et l'on agite jusqu'à complète homogénéisation.

La préparation ainsi obtenue qui est ensuite surgelée à -20°C peut se conserver facilement dans cet état jusqu'à son utilisation.

Pour réaliser la mousse selon l'invention, on prend 1 kg de cette dernière préparation que l'on fait décongeler et à laquelle on ajoute 650 g de crème fraîche.

On soumet ce mélange à l'action d'un batteur pendant 12 minutes et l'on obtient 2,8 litres d'une mousse de fraises qui présente un coefficient de foisonnement de 4,3 , une fine texture, une bonne stabilité et d'excellentes qualités gustatives.

### Exemple 2

Pour obtenir une mousse de framboises, on mélange à 8 litres d'eau, à la température de 85°C, 1700 g d'une base foisonnante à froid constituée d'une poudre émulsifiante à froid contenant environ 35% d'esters lactiques de mono et/ou diglycéride d'acide gras, et environ 20% de matière grasse animale, et 1600 g de poudre gélifiante comportant environ 80% de gélatine et environ 15% de mono et de diglycéride d'acide gras, telle que celle vendue sous la dénomination TDA 300 par la Société HAHN.

Puis, on dissout dans cette composition 8,4 Kg de sucre cristallisé.

On ajoute ensuite 22 kg de purée de framboises en homogénéisant puis on surgèle cette préparation à -20°C.

Pour réaliser une mousse de framboises selon l'invention, on fait décongeler 1 kg de cette préparation ainsi obtenue à laquelle on ajoute 1000 g d'une composition contenant 500 g de crème végétale et 500 g de lait animal et l'on soumet l'ensemble à l'action d'un batteur pendant 10 minutes.

On obtient ainsi 5 litres de mousse de framboises présentant un coefficient de foisonnement de 5, une texture fine, une bonne tenue et une excellente qualité gustative.

### Exemple 3

Pour réaliser une mousse de cassis selon l'invention, on mélange dans 8 litres d'eau à 85°C, 1300 g de gélatine alimentaire, 1700 g d'une base foisonnante à froid sous forme de poudre contenant 600 g d'émulsifiant à base d'ester de mono et/ou de diglycéride d'acide gras et 1000 g de matière grasse végétale ou animale, et 8 kg de sucre, en agitant jusqu'à complète homogénéisation du produit.

On ajoute ensuite 23 kg de purée de cassis et on agite pour obtenir une préparation homogène qui est ensuite surgelée à -20°C.

Pour réaliser la mousse de cassis, on prélève 1 kg de cette préparation que l'on fait décongeler. On ajoute 1,9 kg de crème liquide et l'on traite dans un batteur pendant environ 15 mn.

On obtient ainsi 3,5 litres de mousse de cassis qui présente un coefficient de foisonnement de 1,8, une très bonne tenue et une grande qualité gustative.

### Exemple 4

Pour réaliser une mousse au caramel selon l'invention, on part d'une base alimentaire constituée par 10 litres d'eau à température ambiante dans laquelle on a dissous 16 kg de sucre caramélisé et 2,4 kg de sucre cristallisé.

On prend 9 litres d'eau à température ambiante dans laquelle on a fait dissoudre 1,8 kg de poudre contenant 80% de gélatine alimentaire, atomisée sur une base protéinique, 1,8 kg d'une base foisonnante sous forme de poudre contenant 650 g d'émulsifiant à base d'ester de mono et/ou de diglycéride d'acide gras et 360 g de matière grasse végétale et 2,4 kg de sucre cristallisé en agitant jusqu'à complète homogénéisation.

On mélange ces deux compositions aqueuses pour obtenir la préparation caramélisée que l'on surgèle à la température de -20°C.

Pour préparer une mousse au caramel selon l'invention, on prélève 1 kg de cette préparation que l'on fait décongeler.

On y ajoute 1 litre de crème animale liquide.

On traite le tout dans un batteur pendant 12 minutes et on obtient 4 litres de mousse au caramel qui possède un coefficient de foisonnement de 4 et qui présente une tenue acceptable et une excellente qualité gustative.

### Exemple 5

Pour préparer une mousse de fruits en utilisant une machine à fabriquer la crème chantilly, on dissout dans 8 à 12 litres d'eau à 80°C 1 à à 2 kg d'une composition gélifiante telle que celle vendue sous la dénomination TDA par la Société HAHN, on ajoute à cette solution 1,5 à 3 kg de poudre émulsifiante à froid telle que celle vendue sous la dénomination DAVIWT par la Société HAHN. Puis on ajoute 20 à 25 kg de purée de fruits et de 6 à 9 kg de sucre, et de 0,5 à 1 kg de pectine ou de 0,2 à 0,8 kg de carboxyméthylcellulose, après quoi on agite jusqu'à complète homogénéisation.

Comme pour les autres exemples, cette préparation peut être surgelée à -20°C, température à laquelle elle se conserve facilement jusqu'à son utilisation.

Pour réaliser la mousse selon l'invention, on laisse décongeler cette préparation que l'on introduit dans une machine à fabriquer la crème chantilly à raison de 1 kg de préparation pour 0,6 kg de crème animale liquide.

On obtient ainsi immédiatement et à la demande une mousse de fruits de très bonne qualité qui présente un foisonnement d'environ 2,5.

### Exemple 6

Pour réaliser une mousse parfumée, on dissout dans 10 à 25 litres d'eau à environ 85°C, de 0,8 à 1,5 kg de composition gélifiante, telle que celle vendue sous la dénomination TDA pour la Société HAHN. On ajoute à cette dissolution 1,2 à 2,5 kg d'une poudre émulsionnante à froid telle que celle commercialisée par la Société HAHN sous la dénomination DAVIWT, et de 3 à 10 kg d'une base parfumée, par exemple à la pistache, au chocolat ou au caramel. On ajoute ensuite de 4 à 8 kg de sucre ainsi que de 0,3 à 0,8 kg de pectine ou de 0,1 à 0,7 kg de carboxyméthylcellulose.

La préparation ainsi obtenue est agitée jusqu'à complète homogénéisation, puis surgelée à -20°C, température à laquelle elle peut se conserver.

Pour réaliser une mousse parfumée, il suffit d'introduire la composition précitée, après l'avoir laissé décongeler, dans une machine à fabriquer la crème chantilly à raison de 1 kg de préparation pour 1 kg de crème liquide.

On obtient ainsi, à la demande, une très bonne mousse parfumée qui présente un foisonnement d'environ 2,5.

On voit que l'invention permet d'obtenir de manière simple et dans de bonnes conditions des mousses alimentaires d'excellente qualité.

La caractéristique de ces mousses est de présenter un foisonnement important.

Il peut toutefois arriver que dans certains cas, on désire un coefficient de foisonnement plus limité, par exemple de l'ordre de 2, qui correspond sensiblement au foisonnement de la crème chantilly traditionnelle. Il suffit alors de diminuer la quantité d'émulsifiant, ce qui confère à la mousse une plus grande perception de l'arôme de la base alimentaire.

Conformément à l'invention, la préparation surgelée peut être commercialisée seule.

Cette préparation à base de purée de fruits peut être également commercialisée sous la forme d'un conditionnement à deux récipients dont l'un contient la préparation elle-même et dont l'autre contient la composition à base de crème.

L'utilisateur dispose ainsi de tous les ingrédients qui lui sont nécessaires à la réalisation de la mousse et ceci dans les bonnes proportions pour obtenir le résultat final souhaité.

## Revendications

1. Procédé de fabrication d'une préparation aqueuse, destinée à la fabrication d'une mousse alimentaire, par addition de ladite préparation aqueuse avec une composition à base de crème puis battage, **caractérisé par le fait que** l'on mélange
(i) un agent gélifiant,
(ii) une base foisonnante à froid, constituée par un support protéinique gras sur lequel est dispersé un émulsifiant, et obtenue sous forme de poudre par atomisation, et
(iii) une base alimentaire,
et que l'on conserve ladite préparation aqueuse ainsi obtenue par surgélation ou de manière aseptique.

2. Procédé selon la revendication 1, **caractérisé par le fait que** ladite base foisonnante est obtenue en mélangeant à chaud, en phase aqueuse, le support protéinique gras et l'émulsifiant puis en procédant à l'atomisation du mélange ainsi obtenu.

3. Procédé selon l'une quelconque des revendications précédentes, **caractérisé par le fait que** ledit agent gélifiant est à base de gélatine alimentaire.

4. Procédé selon l'une quelconque des revendications précédentes, **caractérisé par le fait que** ledit agent gélifiant est mis en solution aqueuse à une température comprise entre 70 et 90°C à laquelle on ajoute ladite base foisonnante et ladite base alimentaire.

5. Procédé selon l'une quelconque des revendications 1 à 3, **caractérisé par le fait que** ledit agent gélifiant est fixé sur un support protéinique et se présente sous forme de poudre obtenue par atomisation, et que ledit agent gélifiant est incorporé à froid pour la réalisation du mélange.

6. Préparation aqueuse pour la fabrication de mousses alimentaires par addition avec une composition à base de crème et battage, **caractérisée par le fait qu'**elle est conditionnée et qu'elle comporte en combinaison, (i) un agent gélifiant, (ii) une base foisonnante à froid, constituée par un support protéinique gras sur lequel est dispersé un émulsifiant et obtenue sous forme de poudre par atomisation, (iii) une base alimentaire, et éventuellement du sucre.

7. Préparation aqueuse selon la revendication 6, **caractérisée par le fait que** ledit agent gélifiant est à base de gélatine alimentaire.

8. Préparation aqueuse selon la revendication 6 ou 7, **caractérisée par le fait que** ledit agent gélifiant est fixé à un support protéinique.

9. Préparation aqueuse selon l'une quelconque des revendications 6 à 8, **caractérisée par le fait que** l'émulsifiant contenu dans ladite base foisonnante est choisi parmi les mono- et diglycérides d'acides gras alimentaires et les esters de mono- et diglycérides d'acides gras alimentaires, tels que les esters lactiques de mono- et diglycérides d'acides gras alimentaires.

10. Préparation aqueuse selon l'une quelconque des revendications 6 à 9, **caractérisée par le fait que** les proportions dudit agent gélifiant et de ladite base foisonnante à froid sont sensiblement les mêmes, par exemple de 2,5 à 5 % en poids et de préférence de 3 à 4 % en poids par rapport au poids total de la préparation aqueuse.

11. Préparation aqueuse selon l'une quelconque des revendications 6 à 9, **caractérisée par le fait que** la proportion dudit agent gélifiant est d'environ deux tiers de la proportion de ladite base foisonnante à froid.

12. Préparation aqueuse selon l'une quelconque des revendications 6 à 11, **caractérisée par le fait que** ladite base alimentaire est constituée par une purée de fruits, éventuellement sucrée, par une purée de légumes, de poissons ou de crustacés, ou par une dilution telle que de l'eau caramélisée ou chocolatée.

13. Préparation aqueuse selon l'une quelconque des revendications 6 à 12, **caractérisée par le fait que** la proportion de ladite base alimentaire est comprise entre 42,5 et 59,9 % par rapport au poids total de la préparation aqueuse.

14. Procédé de fabrication de mousses alimentaires, **caractérisé par le fait que** l'on ajoute une composition à base de crème avec une préparation aqueuse telle que définie selon l'une quelconque des revendications 6 à 13 ou telle qu'obtenue par le procédé tel que défini selon l'une quelconque des revendications 1 à 5 puis que l'on batte le mélange ainsi obtenu.

15. Procédé de fabrication selon la revendication 14, **caractérisé par le fait que** ladite composition à base de crème contient au moins une crème d'origine animale ou végétale et éventuellement un lait d'origine animale ou végétale.

## Patentansprüche

1. Verfahren zur Herstellung einer wässrigen Zubereitung, bestimmt zur Herstellung eines Nahrungsmittelschaums durch Versetzen der wässrigen Zubereitung mit einer Zubereitung auf Basis von Creme, anschließendes Schlagen, **dadurch gekennzeichnet, dass** man mischt
(i) ein Geliermittel,
(ii) eine im Kalten quellende Basis, bestehend aus einem proteinischen Fett-Träger, auf dem ein Emulgiermittel dispergiert ist, und erhalten in Form eines Pulvers mittels Atomisierung, und
(iii) eine Nahrungsmittelbasis,
und dass man die so erhaltene wässrige Zubereitung durch Einfrieren oder auf aseptische Weise konserviert.

2. Verfahren gemäß Anspruch 1, **dadurch gekennzeichnet, dass** die quellende Basis erhalten wird, in dem man im Warmen in wässriger Phase den proteinischen Fett-Träger und das Emulgiermittel mischt, anschließend mit der Atomisierung der so erhaltenen Mischung fortfährt.

3. Verfahren gemäß einem der vorstehenden Ansprüche, **dadurch gekennzeichnet, dass** das Geliermittel auf Nahrungsmittelgelatine basiert.

4. Verfahren gemäß einem der vorstehenden Ansprüche, **dadurch gekennzeichnet, dass** das Geliermittel bei einer Temperatur zwischen 70 und 90 °C in Lösung gebracht wird, wozu man die quellende Basis und die Nahrungsmittelbasis zugibt.

5. Verfahren gemäß einem der Ansprüche 1 bis 3, **dadurch gekennzeichnet, dass** das Geliermittel auf einem proteinischen Träger fixiert ist und in Form eines durch Atomierung erhaltenen Pulvers vorliegt und dass das Geliermittel im Kalten zur Realisierung der Mischung eingearbeitet wird.

6. Wässrige Zubereitung zur Herstellung von Nahrungsmittelschäumen durch Versetzen mit einer Zubereitung auf Basis von Creme und Schlagen, **dadurch gekennzeichnet, dass** sie konditioniert ist und in Kombination enthält (i) ein Geliermittel, (ii) eine im Kalten quellende Basis, bestehend aus einem proteinischen Fett-Träger, auf dem ein Emulgiermittel dispergiert ist, und erhalten in Form eines Puders mittels Atomisieren, (iii) eine Nahrungsmittelbasis und gegebenenfalls Zucker.

7. Wässrige Zubereitung gemäß Anspruch 6, **dadurch gekennzeichnet, dass** das Geliermittel auf Nahrungsmittelgelatine basiert.

8. Wässrige Zubereitung gemäß Anspruch 6 oder 7, **dadurch gekennzeichnet, dass** das Geliermittel auf einem proteinischen Träger fixiert ist.

9. Wässrige Zubereitung gemäß einem der Ansprüche 6 bis 8, **dadurch gekennzeichnet, dass** das in der im Kalten quellenden Basis enthaltene Emulgiermittel ausgewählt ist unter Mono- und Diglyceriden von Nahrungsmittelfettsäuren und den Mono- und Diglyceridestern von Nahrungsmittelfettsäuren, wie den Milchsäureestern von Monound Diglyeriden von Nahrungsmittelfettsäuren.

10. Wässrige Zubereitung gemäß einem der Ansprüche 6 bis 9, **dadurch gekennzeichnet dass** die Anteile des Geliermittels und der im Kalten quellenden Basis merklich die selben sind, bspw. 2,5 bis 5 Gew.-% und vorzugsweise 3 bis 4 Gew.-%, bezogen auf das Gesamtgewicht der wässrigen Zubereitung.

11. Wässrige Zubereitung gemäß einem der Ansprüche 6 bis 9, **dadurch gekennzeichnet, dass** der Anteil des Geliermittels etwas das zweifache des Anteils der im Kalten quellenden Basis ist.

12. Wässrige Zubereitung gemäß einem der Ansprüche 6 bis 11, **dadurch gekennzeichnet, dass** die Nahrungsmittelbasis besteht aus einem Fruchtpüree, gegebenenfalls gesüßt, einem Brei von Gemüsen, Fischen oder Krustentieren oder einer Verdünnung wie karamellisiertem oder chocolatiertem Wasser bzw. mit Karamell- oder Schokoladenaroma versehenem Wasser.

13. Wässrige Zubereitung gemäß einem der Ansprüche 6 bis 12, **dadurch gekennzeichnet, dass** der Anteil der Nahrungsmittelbasis zwischen 42,5 und 59,9 % liegt, bezogen auf das Gesamtgewicht der wässrigen Zubereitung.

14. Verfahren zur Herstellung von Nahrungsmittelschäumen, **dadurch gekennzeichnet, dass** man eine Zubereitung auf Basis von Creme mit einer wässrigen Zubereitung versetzt, wie sie in einem der Ansprüche 6 bis 13 definiert ist oder wie sie über ein Verfahren erhalten wird, wie es gemäß einem der Ansprüche 1 bis 5 definiert ist, wonach man die so erhaltene Mischung schlägt.

15. Herstellungsverfahren nach Anspruch 14, **dadurch gekennzeichnet, dass** die Zubereitung auf Basis von Creme mindestens eine Creme tierischen oder pflanzlichen Ursprungs und gegebenenfalls eine Milch tierischen oder pflanzlichen Ursprungs enthält.

## Claims

1. Method, for manufacturing an aqueous preparation intended for the manufacture of a food mousse by adding to the said aqueous preparation a cream-based composition, followed by beating, **characterized in that** there are mixed
(i) a gelling agent,
(ii) a bass producing overrun in the cold state, consisting of a fatty proteinaceous support on which an emulsifier is dispersed, and which is obtained in the form of a powder by spray-drying, and
(iii) a food base,
and **in that**, the said aqueous preparation thus obtained is preserved by deep-freezing or aseptically.

2. Method according to Claim 1, **characterized in that** the said overrun-producing base is obtained by mixing in the hot state, in an aqueous phase, the fatty proteinaceous support and the emulsifier, and then by spray-drying the mixture thus obtained.

3. Method according to either of the preceding claims, **characterized in that** the said gelling agent is based on food gelatine.

4. Method according to any one of the preceding claims, **characterised in that** the said gelling agent is dissolved in an aqueous solution at a temperature of between 70 and 90°C, to which the said overrun-producing base and the said food base are added.

5. Method according to any one of Claims 1 to 3, **characterised in that** the said gelling agent is attached to a proteinaceous support and is provided in the form of a powder obtained by spray-drying, and **in that** the said gelling agent is incorporated in the cold state for the production of the mixture.

6. Aqueous preparation for the manufacture of food mousses by adding a cream-based composition and beating, **characterized in that** it is packaged and **in that** it comprises in combination, (i) a gelling agent, (ii) a base producing overrun in the cold state, consisting of a fatty proteinaceous support on which an emulsifier is dispersed, and obtained in the form of a powder by spray-drying, (iii) a food base, and optionally sugar.

7. Aqueous preparation according to claim 6, **characterized in that** the said gelling agent is based on food gelatine.

8. Aqueous preparation according to Claim 6 or 7, **characterized in that** the said gelling agent is attached to a proteinaceous support.

9. Aqueous preparation according to any one of claims 6 to 8, **characterized in that** the emulsifier contained in the said overrun-producing base is chosen from dietary fatty acid mono- and diglycerides and esters of dietary fatty acid mono- and diglycerides, such as the lactic esters of dietary fatty acid mono- and diglycerides.

10. Aqueous preparation according to any one of Claims 6 to 9, **characterized in that** the proportions of the said gelling agent and of the said base producing overrun in the cold state are substantially the same, for example 2.5 to 5% by weight and preferably 3 to 4% by weight relative to the total weight of the aqueous preparation.

11. Aqueous preparation according to any one of claims 6 to 9, **characterized in that** the proportion of the said gelling agent is about two-thirds of the proportion of the said base producing overrun in the cold state.

12. Aqueous preparation according to any one of Claims 6 to 11, **characterized in that** the said food base consists of a fruit purée, which is optionally aweetened, of a purée made of vegetables, fish or crustaceans, or of a dilution such as caramel-flavoured or chocolate-flavoured water.

13. Aqueous preparation according to any one of Claims 6 to 12, **characterized in that** the proportion of the said food base is between 42.5 and 59.9% relative to the total weight of the aqueous preparation.

14. Method for manufacturing food mousses, **characterized in that** there is added to a cream-based composition an aqueous preparation as defined according to any one of Claims 6 to 13 or as obtained by the method as defined according to any one of Claims 1 to 5 and then **in that** the mixture thus obtained is beaten.

15. Method of manufacture according to claim 14, **characterized in that** the said cream-based composition contains at least one cream of animal or plant origin and optionally a milk of animal or plant origin.
